# DEMANDE DE BREVET EUROPEEN

(11) **EP 4 761 138 A1**
(43) Date de publication de la demande: **17.06.2026**
(21) Numéro de dépôt: 25222050.4
(22) Date de dépôt: 10.12.2025
(51) Int. Cl.: H04B 10/00, H04B 10/2575

(54) **DISPOSITIF DE MULTIPLEXAGE DE SIGNAUX RADIOFRÉQUENCES, DISPOSITIF DE DÉMULTIPLEXAGE DE SIGNAUX RADIOFRÉQUENCES ET SYSTÈME DE TRAITEMENT NUMÉRIQUE ASSOCIÉ**

(30) Priorité: 10.12.2024 FR 2413754
(71) Demandeur: THALES, 92190 Meudon (FR)
(72) Inventeur: CHARRAT, Bernard, 31037 TOULOUSE CEDEX 1 (FR); FAUGERON, Mickael, 31037 TOULOUSE CEDEX 1 (FR); ROUX, Sophie, 31037 TOULOUSE CEDEX 1 (FR); SOTOM, Michel, 31037 TOULOUSE CEDEX 1 (FR); BENAZET, Benoit, 31037 TOULOUSE CEDEX 1 (FR)
(74) Mandataire: Lavoix

(57) **Abrégé**

La présente invention concerne un dispositif de multiplexage (22) des signaux RF comprenant :
- une pluralité d'entrées RF (44) ;
- une pluralité de convertisseurs de fréquence (50), chaque convertisseur de fréquence (50) étant associé à une ou plusieurs entrées RF (44) et configuré pour recevoir des signaux RF issus de cet ou ces entrées RF (44) et pour les convertir en signaux optiques ;
- une pluralité de multiplexeurs optiques (52), chaque multiplexeur optique (52) étant configuré pour multiplexer au moins deux signaux optiques de longueurs d'onde différentes ;
- une pluralité de photorécepteurs (54), chaque photorécepteur (54) étant configuré pour convertir un signal optique multiplexé en un signal RF multiplexé ;
- une pluralité de sorties RF (46), chaque sortie RF (46) étant configurée pour fournir un signal RF multiplexé.

## Description

La présente invention concerne un système de multiplexage des signaux radiofréquences appelés également signaux RF.

La présente invention concerne également un dispositif de démultiplexage des signaux RF.

La présente invention concerne finalement un système de traitement numérique comprenant soit le dispositif de multiplexage des signaux RF, soit le dispositif de démultiplexage des signaux RF, soit les deux.

L'invention se situe plus particulièrement dans le domaine des charges utiles des satellites de télécommunication et en particulier des charges utiles comprenant un processeur numérique.

De tels processeurs numériques sont de plus en plus utilisés dans les charges utiles des satellites de télécommunication grâce notamment à la flexibilité de mission qu'ils apportent.

De manière connue en soi, ces processeurs numériques comportent des convertisseurs analogiques/numériques en entrée et numériques/analogiques en sortie.

Ces processeurs sont ainsi capables de réaliser sur les signaux RF numérisés toute une série de fonctions de filtrage, de commutation, d'égalisation, de transposition, etc. Cela fait alors de ces processeurs des équipements extrêmement puissants.

De manière également connue en soi, les ports d'entrée et de sortie de ces processeurs fonctionnent dans des bandes de fréquence d'entrée et de sortie fixes.

Lorsque cela est possible, l'utilisation de fonctions de multiplexage RF permet d'agréger plusieurs signaux RF et de réduire le nombre de signaux d'entrée à traiter par le processeur numérique. En réduisant ainsi le nombre de ports d'entrée du processeur, il est possible de limiter sa complexité, c'est-à-dire sa masse, sa consommation et son coût.

Symétriquement, des fonctions de démultiplexage RF en sortie du processeur numérique permettent d'augmenter le nombre de voies RF adressées et de limiter le nombre de ports de sortie de ce dernier.

Les fonctions de multiplexage/démultiplexage RF pénalisent cependant les charges utiles par la masse et le coût de ces filtres ou multiplexeurs RF spécifiques.

L'état de la technique actuel consiste à utiliser des charges utiles RF avec des fonctions de multiplexage ou de démultiplexage réalisées à partir des filtres ou multiplexeurs RF pour respectivement combiner ou séparer des signaux RF placés dans différentes sous-bandes.

L'inconvénient majeur de l'état de la technique est donc de pénaliser ces charges utiles RF en masse et en coût avec l'ajout de ces filtres et multiplexeurs spécifiques.

La présente invention a pour but de résoudre ce problème de l'état de la technique et de proposer donc des moyens permettant de réaliser des fonctions de multiplexage/démultiplexage des signaux RF au sein des charges utiles, notamment de satellites de télécommunication, sans pénaliser ces charges utiles en masse et en coût.

À cet effet, l'invention concerne un dispositif de multiplexage de signaux RF comprenant :
- une pluralité d'entrées RF, chaque entrée RF étant configurée pour recevoir un signal RF ;
- une pluralité de convertisseurs de fréquence, chaque convertisseur de fréquence étant associé à une ou plusieurs entrées RF et configuré pour recevoir les signaux RF issus de cet ou ces entrées RF et pour les convertir en signaux optiques de longueur d'onde choisie parmi au moins deux longueurs d'onde différentes ;
- une pluralité de multiplexeurs optiques, chaque multiplexeur optique étant configuré pour multiplexer au moins deux signaux optiques de longueurs d'onde différentes pour former un signal optique multiplexé ;
- une pluralité de photorécepteurs, chaque photorécepteur étant configuré pour convertir un signal optique multiplexé en un signal RF multiplexé ;
- une pluralité de sorties RF, chaque sortie RF étant configurée pour fournir un signal RF multiplexé.

Selon d'autres aspects avantageux de l'invention, le dispositif de multiplexage comprend une ou plusieurs des caractéristiques suivantes prises isolément ou suivant toutes les combinaisons techniquement possibles :
- le dispositif de multiplexage comprenant en outre une pluralité de multiplexeurs RF, chaque multiplexeur RF étant associé à au moins deux entrées RF et configuré pour multiplexer les signaux RF issus de ces entées RF ;
- chaque convertisseur de fréquence est associé à l'un des multiplexeurs RF et configuré pour recevoir un signal RF issu de ce multiplexeur RF ;
- chaque convertisseur de fréquence est un modulateur électro-optique de type Mach-Zehnder ;
- le nombre de multiplexeurs optiques est au moins deux fois inférieur à celui de convertisseurs de fréquence ;
- le nombre de photorécepteurs correspond à celui de multiplexeurs optiques ;
- le nombre de sorties RF est au moins deux fois inférieur, avantageusement quatre fois inférieur, à celui d'entrées RF ;
- le dispositif de multiplexage comprenant en outre une pluralité de filtres RF optiques configurés pour filtrer les signaux optiques avant leur multiplexage.

La présente invention concerne également un dispositif de démultiplexage des signaux RF comprenant :
- une pluralité d'entrées RF, chaque entrée RF étant configurée pour recevoir un signal RF ;
- une pluralité de convertisseurs de fréquence, chaque convertisseur de fréquence étant associé à l'une des entrées RF et configuré pour recevoir les signaux RF issus de cette entrée RF et pour les convertir en signaux optiques comprenant deux longueurs d'onde modulées ;
- une pluralité de démultiplexeurs optiques, chaque démultiplexeur optique étant configuré pour démultiplexer chaque signal optique pour former au moins deux signaux optiques démultiplexés de longueurs d'onde différentes ;
- une pluralité de photorécepteurs, chaque photorécepteur étant configuré pour convertir un signal optique démultiplexé en un signal RF démultiplexé ;
- une pluralité de sorties RF, chaque sortie RF étant configurée pour fournir un signal RF démultiplexé.

Selon d'autres aspects avantageux de l'invention, le dispositif de démultiplexage comprend une ou plusieurs des caractéristiques suivantes prises isolément ou suivant toutes les combinaisons techniquement possibles :
- le dispositif de démultiplexage comprenant en outre une pluralité de filtres RF optiques configurés pour filtrer les signaux optiques après leur démultiplexage ;
- le dispositif de multiplexage comprenant en outre une pluralité de démultiplexeurs RF, chaque démultiplexeur RF étant associé à l'un des photorécepteurs et permet de former à partir du signal RF fourni par ce photorécepteur au moins deux signaux RF démultiplexés ;
- chaque sortie RF est associée à l'un des démultiplexeurs RF et configurée pour recevoir un signal RF démultiplexé issu de ce démultiplexeur RF ;
- le nombre de démultiplexeurs optiques est au moins deux fois inférieur à celui de photorécepteurs ;
- le nombre de sorties RF est au moins deux fois supérieur, avantageusement quatre fois inférieur, à celui d'entrées RF ;

L'invention concerne enfin un système de traitement numérique un système de traitement numérique comprenant un processeur comprenant une pluralité de ports d'entrée analogiques et/ou une pluralité de ports de sortie analogiques ;
le système de traitement comprenant en outre :
- un dispositif de multiplexage tel que défini précédemment, connecté aux entrées analogiques du processeur par ses sorties RF ; et/ou
- un dispositif de démultiplexage tel que défini précédemment, connecté aux sorties analogiques du processeur par ses entrées RF.

Ces caractéristiques et avantages de l'invention seront mieux compris à la lecture de la description qui va suivre, donnée uniquement à titre d'exemple non limitatif et faite en référence aux dessins dans lesquels :
- [Fig.1] La figure 1 est une vue schématique d'un système de traitement numérique selon l'invention ;
- [Fig.2] La figure 2 est une vue schématique d'un dispositif de multiplexage du système de traitement numérique de la figure 1 ;
- [Fig.3] La figure 3 est une vue schématique du dispositif de multiplexage selon un mode de réalisation autre que celui de la figure 2 ;
- [Fig.4] La figure 4 est une vue schématique d'un dispositif de démultiplexage du système de traitement numérique de la figure 1 ; et
- [Fig.5] La figure 5 est une vue schématique d'un dispositif de démultiplexage selon un mode de réalisation autre que celui de la figure 4.

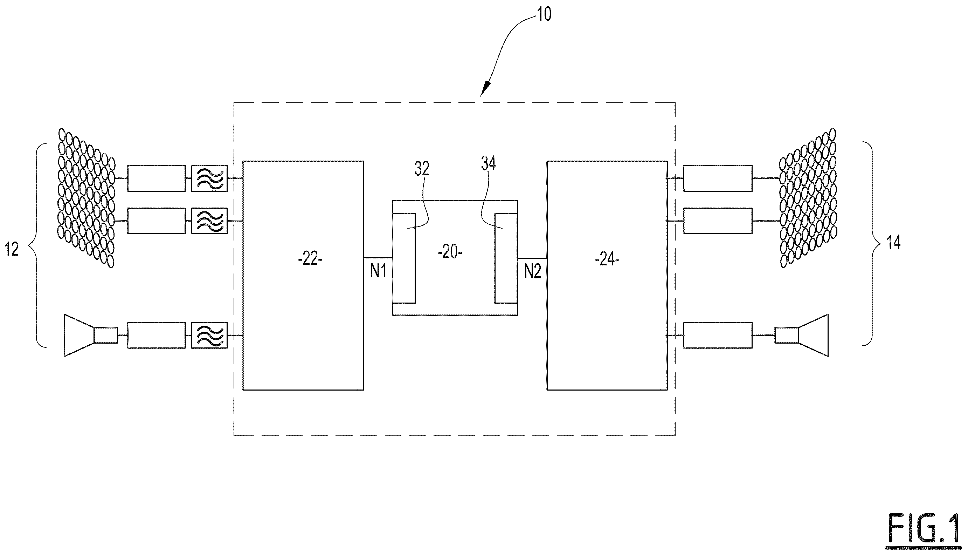

On a en effet illustré sur la figure 1 un système de traitement numérique 10 selon l'invention.

Le système de traitement numérique 10 présente par exemple une charge utile d'un satellite, notamment d'un satellite de télécommunication.

Suivant d'autres modes de réalisation, le système de traitement numérique 10 fait partie de tout autre système permettant de traiter numériquement des signaux RF numérisés.

Dans l'exemple de la figure 1, le système de traitement numérique 10 est raccordé en entrée à une pluralité de récepteurs de signaux RF 12 et en sortie à une pluralité d'émetteurs de signaux RF 14. Selon différents exemples de réalisation, un tel raccordement peut être faite de manière directe ou à travers d'autres éléments connus en soi, tels que différents types d'amplificateurs, de réducteurs de bruits, etc.

Avantageusement, chaque récepteur de signaux RF 12 présente un élément rayonnant tel qu'un élément d'une antenne réseau par exemple, qui est apte à recevoir des signaux RF dans une bande de réception prédéterminée. Alternativement, chaque récepteur de signaux RF 12 présente une antenne passive.

De manière analogue, chaque émetteur de signaux RF 14 présente un élément, par exemple un élément rayonnant d'une antenne réseau, qui est apte à émettre des signaux RF selon une bande de fréquence prédéterminée. Alternativement, chaque émetteur de signaux RF 14 présente une antenne passive.

Le système de traitement 10 permet ainsi de traiter numériquement des signaux RF reçus par les récepteurs de signaux RF 12 et de générer des signaux RF à émettre par les émetteurs de signaux RF 14.

Dans certains modes de réalisation, le système de traitement numérique 10 permet uniquement de traiter les signaux RF reçus ou alors uniquement de générer des signaux RF à émettre. Dans le premier cas, le système de traitement numérique 10 peut être raccordé uniquement aux récepteurs de signaux RF 12 et dans le deuxième cas, uniquement aux émetteurs de signaux RF 14.

Pour mettre en œuvre le traitement des signaux RF, le système de traitement numérique 10 comprend un processeur 20. En outre, en fonction de différents modes de réalisation, le système de traitement 10 comprend un dispositif de multiplexage 22 et/ou un dispositif de démultiplexage 24.

Le processeur 20 est par exemple implémenté selon la technologie VHTS (de l'anglais « Very High Throughput Satellite »).

En outre, le processeur 20 permet de convertir les signaux analogiques en signaux numériques et vice versa. Le processeur 20 permet également de traiter numériquement les signaux RF numérisés et de générer d'autres signaux à émettre, selon des techniques connues en soi.

Pour ce faire, le processeur 20 comprend un convertisseur analogique/numérique 32 permettant de convertir les signaux RF en signaux numériques et un convertisseur numérique/analogique 34 permettant de convertir les signaux numériques en signaux RF.

Le convertisseur analogique/numérique 32 comprend une pluralité de ports d'entrée analogiques. Le nombre de ces ports d'entrée analogiques est par exemple égal à N1.

Le convertisseur numérique/analogique 34 comprend une pluralité de ports de sortie analogiques. Le nombre de ces ports de sortie analogiques est par exemple égal à N2.

Le nombre N1 peut être égal au nombre N2.

Ce nombre N1 ou N2 est par exemple compris entre 30 et 80 et avantageusement égal à 50.

Par ailleurs, le nombre N1 est strictement inférieur au nombre de récepteurs de signaux RF 12 et le nombre N2 est strictement inférieur au nombre d'émetteurs de signaux RF 14.

Le dispositif de multiplexage 22 permet de raccorder les récepteurs de signaux RF 12 aux N1 ports d'entrée analogiques du processeur 20 et le dispositif de démultiplexage 24 permet de raccorder les N2 ports de sortie analogiques du processeur 20 aux émetteurs des signaux RF 14. Dans certains modes de réalisation, au moins un récepteur de signaux RF 12 est raccordé directement à un port d'entrée du processeur 20 (i.e. sans passer par le dispositif de multiplexage 22) et/ou au moins un émetteur de signaux RF 14 est raccordé directement à un port de sortie du processeur 20 (i.e. sans passer par le dispositif de démultiplexage 24).

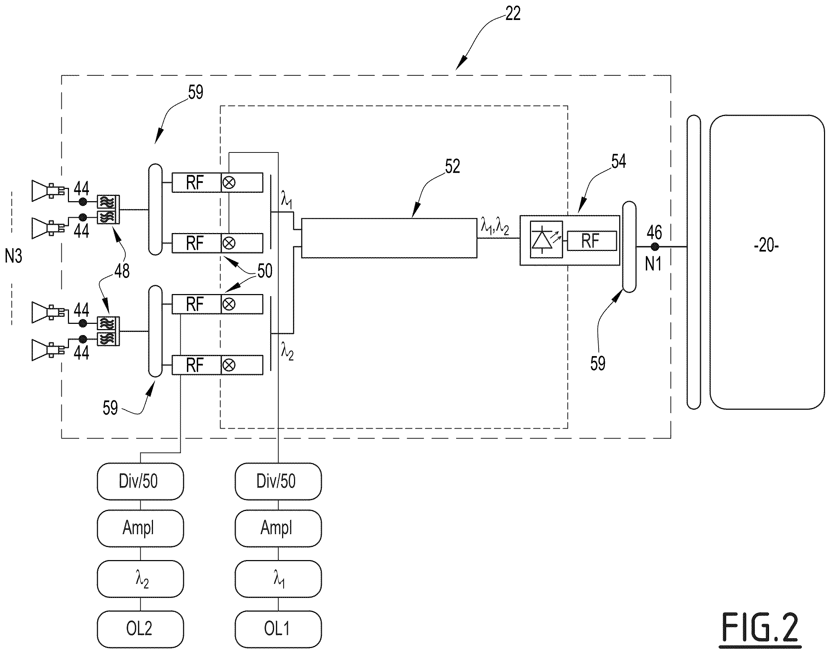

Le dispositif de multiplexage 22 sera désormais expliqué plus en détail en référence à la figure 2.

Ainsi, en référence à cette figure 2, le dispositif de multiplexage 22 comprend une pluralité d'entrées RF 44. Le nombre de ces entrées RF 44 est égal au nombre N3 qui correspond par exemple au nombre total des récepteurs de signaux RF 12.

Le nombre N3 est par exemple deux fois, avantageusement quatre fois, supérieur au nombre N1 de ports d'entrée analogiques du processeur 20. Ainsi, ce nombre N3 est par exemple compris entre 150 et 250 et par exemple avantageusement égal à 200.

Chaque entrée RF 44 est ainsi raccordée à un récepteur de signaux RF 12 correspondant et permet de recevoir chaque signal RF issu de ce récepteur de signaux RF 12.

Le dispositif de multiplexage 22 comprend en outre une pluralité de sorties RF 46. Chaque sortie RF 46 est raccordée à l'un des ports d'entrée analogiques du processeur 20. Le nombre de ces sorties RF 46 est alors égal au nombre N1.

Ainsi, le nombre de sorties RF 46 du dispositif de multiplexage 22 est au moins deux fois, avantageusement quatre fois inférieur au nombre d'entrées RF 44.

De manière optionnelle, le dispositif de multiplexage 22 comprend une pluralité de multiplexeurs RF 48 permettant de multiplexer au moins deux signaux RF issus des entrées RF 44 différentes.

En particulier, chaque multiplexeur RF 48 est raccordé à au moins deux entrées RF 44, par exemple par des harnais RF, et permet de recevoir et de multiplexer les signaux RF issus de ces entrées RF 44.

Ainsi, le nombre de multiplexeurs RF 48 est avantageusement égal à N3/2.

Le dispositif de multiplexage 22 comprend en outre une pluralité de convertisseurs de fréquence 50.

Chaque convertisseur de fréquence 50 est raccordé à l'un des multiplexeurs RF 48 et configuré pour recevoir un signal RF issu de ce multiplexeur RF 48 pour le convertir en un signal optique. La longueur d'onde de ce signal optique est choisie parmi au moins deux longueurs d'onde différentes, à savoir λ₁ et λ₂.

En particulier, dans le mode de réalisation de la figure 2, les convertisseurs de fréquence 50 sont divisés en deux groupes. De préférence, chaque groupe présente le même nombre de convertisseurs de fréquence que l'autre groupe.

Le premier groupe de convertisseurs de fréquence 50 est alimenté par le signal optique à la longueur d'onde λ₁ et qui porte la fréquence OL1. À la sortie de chaque convertisseur 50, le signal optique à la longueur d'onde λ₁ transporte le mélange de la fréquence OL1 avec le signal RF d'entrée A à la fréquence RFin de ce convertisseur 50.

Le deuxième groupe de convertisseurs de fréquence 50 est alimenté par le signal optique à la longueur d'onde λ₂ et qui porte la fréquence OL2. À la sortie de chaque convertisseur 50, le signal optique à la longueur d'onde λ₂ transporte le mélange de la fréquence OL2 avec le signal RF d'entrée B à la fréquence RFin de ce convertisseur 50.

Ainsi, le nombre total de convertisseurs de fréquence 50 est avantageusement égal au nombre de multiplexeurs RF 48, c'est-à-dire N3/2.

Avantageusement, chaque convertisseur de fréquence 50 présente un modulateur électro-optique de type Mach-Zehnder.

Selon l'invention, le dispositif de multiplexage 22 comprend en outre une pluralité de multiplexeurs optiques 52 et une pluralité de photorécepteurs 54.

Chaque multiplexeur optique 52 est connecté à au moins deux convertisseurs de fréquence 50 de groupes différents et permet alors de regrouper les signaux optiques de longueurs d'onde différentes issues de ces convertisseurs de fréquence 50.

Chaque multiplexeur optique 52 permet ainsi de multiplexer les signaux optiques de longueurs d'onde différentes reçues pour former un signal optique multiplexé.

Chaque multiplexeur optique 52 est avantageusement raccordé au convertisseur de fréquence 50 correspondant par une fibre optique.

Ainsi, le nombre de multiplexeurs optiques 52 est au moins deux fois inférieur au nombre de convertisseurs de fréquence 50.

Dans l'exemple de la figure 2, le nombre de ces multiplexeurs optiques 52 est alors égal à N3/4.

Avantageusement, chaque multiplexeur optique 52 est implémenté selon la technologie WDM (de l'anglais « Wavelength Division Multiplexing »).

Chaque photorécepteur 54 est raccordé à l'un des multiplexeurs optiques 52 avantageusement par une fibre optique et configuré pour recevoir le signal optique multiplexé issu de ce multiplexeur optique pour le convertir en un signal RF multiplexé. Ce signal RF contient les 2 composants A et B converties en fréquence à la fréquence RFin-f_{OL1} pour le signal A et à la fréquence RFin-f_{OL2} pour le signal B.

Le nombre de ces photorécepteurs 54 est donc égal à celui des multiplexeurs optiques 52.

Enfin, chaque photorécepteur 54 est raccordé avantageusement par un câble coaxial ou un harnais RF à l'une des sorties RF 46 et permet alors de transmettre chaque signal RF multiplexé converti à cette sortie RF 46.

Avantageusement, la bande de fréquence de signaux RF multiplexés générés par les photorécepteurs 54 est comprise dans la bande passante des signaux RF que les ports d'entrée analogiques du processeur 20 sont aptes à recevoir.

Le dispositif de multiplexage 22 peut comprendre en outre d'autres éléments, notamment des éléments de connexion permettant de raccorder les différentes composantes expliquées ci-dessus.

Par exemple, le dispositif de multiplexage 22 comprend en outre un anneau de raccordement 59 agencé entre les multiplexeurs RF 48 et le premier groupe de convertisseurs de fréquence 50 et un autre anneau de raccordement 59 agencé entre les multiplexeurs RF et le deuxième groupe de convertisseurs de fréquence 50.

Le dispositif de multiplexage 22 peut comprendre en outre un anneau de raccordement 59 agencé entre les photorécepteurs 54 et les sorties RF 46.

Cet anneau de raccordement 59 peut être redondant d'un autre anneau de raccordement agencé du côté du processeur 20.

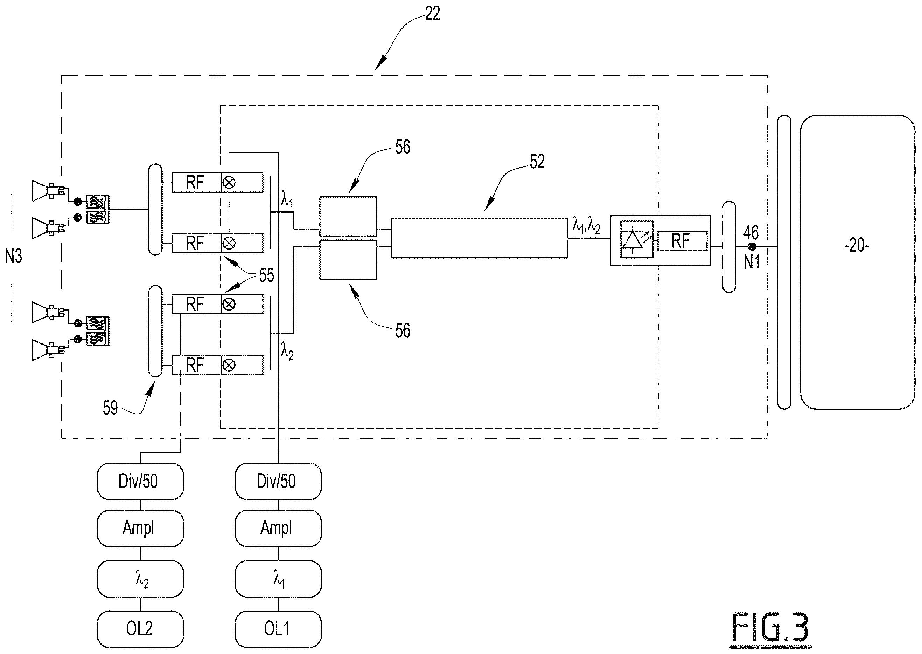

Dans un mode de réalisation alternatif représenté sur la figure 3, le dispositif de multiplexage 22 comprend en outre une pluralité de filtres RF optiques 56 configurés pour filtrer les signaux optiques avant leur multiplexage.

En particulier, chaque filtre RF optique 56 est raccordé entre l'un des convertisseurs de fréquence 55 et le multiplexeur optique 52 correspondant.

Le nombre de ces filtres RF optiques 56 correspond alors à celui des convertisseurs de fréquence 55.

Chaque filtre RF optique 56 permet de filtrer le signal optique correspondant permettant ainsi de compléter la réjection pouvant être apportée par le processeur 20 et de préserver le rapport signal-bruit après multiplexage. En particulier, un tel filtre présente un filtre de type passe bande autour de la porteuse optique et avec une largeur suffisante pour ne pas filtrer le mélange de la fréquence OL correspondante avec le signal RF d'entrée correspondant à la fréquence RFin du convertisseur RF.

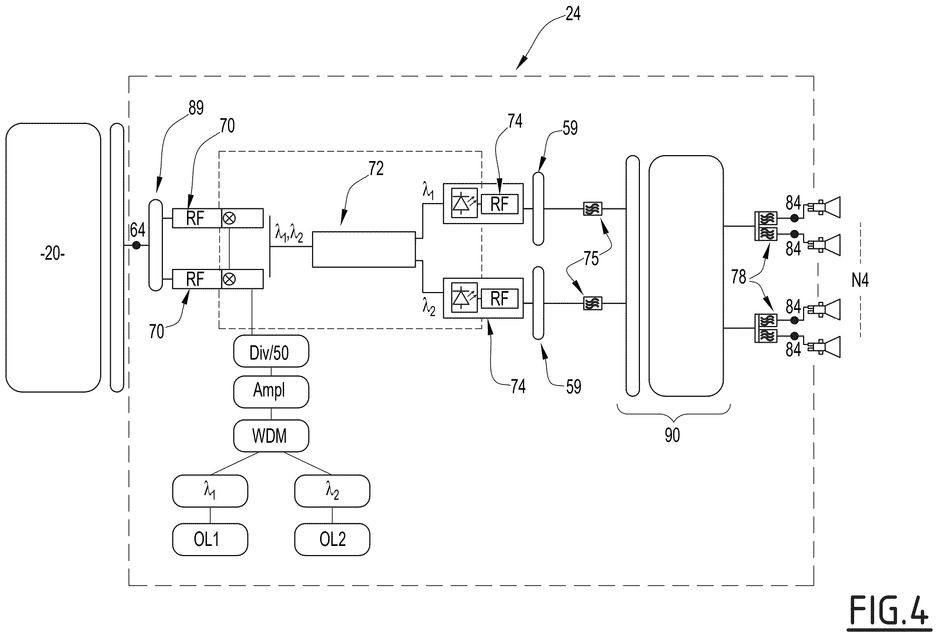

Le dispositif de démultiplexage 24 sera désormais expliqué en référence à la figure 4.

Ce dispositif de démultiplexage 24 présente une structure sensiblement symétrique à celle du dispositif de multiplexage 22. Les différentes composantes de ce dispositif de démultiplexage 24 décrites ci-dessous sont donc analogues aux composantes correspondantes du dispositif de multiplexage 22 mais certaines d'entre elles fonctionnent selon un sens inverse.

En particulier, le dispositif de démultiplexage 24 comprend une pluralité d'entrées RF 64 raccordées aux ports de sortie analogiques du processeur 20.

Chaque entrée RF 64 est raccordée donc à l'un des ports de sortie analogiques du processeur 20 et permet de recevoir un signal RF issu de ce port.

Le nombre de ces entrées RF 64 correspond alors au nombre N2, c'est-à-dire, au nombre de ports de sortie analogiques du processeur 20.

Le dispositif de démultiplexage 24 comprend en outre pour chaque entrée RF 64, un convertisseur de fréquence 70.

Chaque convertisseur de fréquence 70 est configuré pour recevoir un signal RF issu de l'entrée RF 64 correspondante et pour convertir ce signal RF en un signal optique.

Chaque convertisseur de fréquence 70 est alimenté par un signal optique multiplexé composé d'une longueur d'onde λ₁ et qui porte la fréquence OL1 et d'une longueur d'onde λ₂ et qui porte la fréquence OL2.

À la sortie de chaque convertisseur de fréquence 70, le signal optique correspondant transporte le mélange de la fréquence OL1 avec le signal RF d'entrée A+B à la fréquence RFin de ce convertisseur et le mélange de la fréquence OL2 avec le signal RF d'entrée A+B à la fréquence RFin de ce convertisseur.

Le dispositif de démultiplexage 24 comprend en outre pour chaque convertisseur de fréquence 70, un démultiplexeur optique 72 connecté alors à l'un des convertisseurs de fréquence 70 par une fibre optique.

Ce démultiplexeur optique 72 est configuré pour recevoir chaque signal optique issu du convertisseur de fréquence 70 correspondant et pour générer des signaux optiques démultiplexés de longueurs d'onde différentes, à savoir λ₁ et λ₂.

Le dispositif de démultiplexage 24 comprend en outre un photorécepteur 74 pour chaque signal optique démultiplexé par le démultiplexeur optique 72 correspondant.

Chaque photorécepteur 74 est configuré pour convertir le signal optique démultiplexé correspondant à un signal RF démultiplexé. Ce signal RF demultiplexé contient les 2 composants A+B converties en fréquence à la fréquence RFout = OL + RFin. Pour les photorécepteurs du premier groupe (recevant λ₁), la composante A est centrée à la fréquence RFout. Pour les photorécepteurs du deuxième groupe (recevant λ₂), la composante B est centrée à la fréquence RFout.

Un filtre RF 75 après chaque photorécepteur 74 permet de filtrer la composante que l'on ne souhaite pas garder (B pour le premier groupe et A pour le deuxième groupe).

Le nombre de photorécepteurs 74 est au moins deux fois supérieur à celui des multiplexeurs optiques 72.

L'ensemble des photorécepteurs 74 forment deux groupes : un premier groupe apte à recevoir les signaux optiques démultiplexés de longueur d'onde λ₁ et un deuxième groupe apte à recevoir les signaux optiques démultiplexés de longueur d'onde λ₂.

De manière optionnelle, le dispositif de démultiplexage 24 comprend en outre pour chaque photorécepteur 74 un démultiplexeur RF 78 permettant de former à partir du signal RF fourni par ce photorécepteur 74 au moins deux signaux RF démultiplexés.

Enfin, le dispositif de démultiplexage 24 comprend en outre une pluralité de sorties 84 permettant de fournir les signaux RF démultiplexés aux émetteurs des signaux RF 14 correspondants. En particulier, le nombre de ces sorties 84 est égal au nombre N4, ce qui correspond avantageusement au nombre des émetteurs de signaux RF 14.

Ainsi, avantageusement, le nombre N4 est quatre fois supérieur au nombre N2 de ports de sortie analogiques du processeur 20.

Le dispositif de démultiplexage 24 peut comprendre en outre d'autres éléments assurant notamment les différentes fonctions de connexion au sein du dispositif de démultiplexage 24.

Ainsi, en référence à la figure 4, le dispositif de démultiplexage 24 comprend en outre un anneau de raccordement 89 permettant de raccorder les convertisseurs de fréquence 70 à un anneau de raccordement correspondant du côté du processeur 20.

En outre, le dispositif de démultiplexage 24 comprend un anneau de raccordement agencé entre chaque groupe de photorécepteurs 74 et les démultiplexeurs des signaux RF 78 correspondants.

Le dispositif de démultiplexage 24 peut comprendre en outre une unité d'amplification RF 90 raccordée alors entre les photorécepteurs 74 et les démultiplexeurs RF 78. Cette unité d'amplification 90 peut par exemple être de type LCTWTA (de l'anglais *Linearized Channelized Traveling-Wave Tube Aamplifier).*

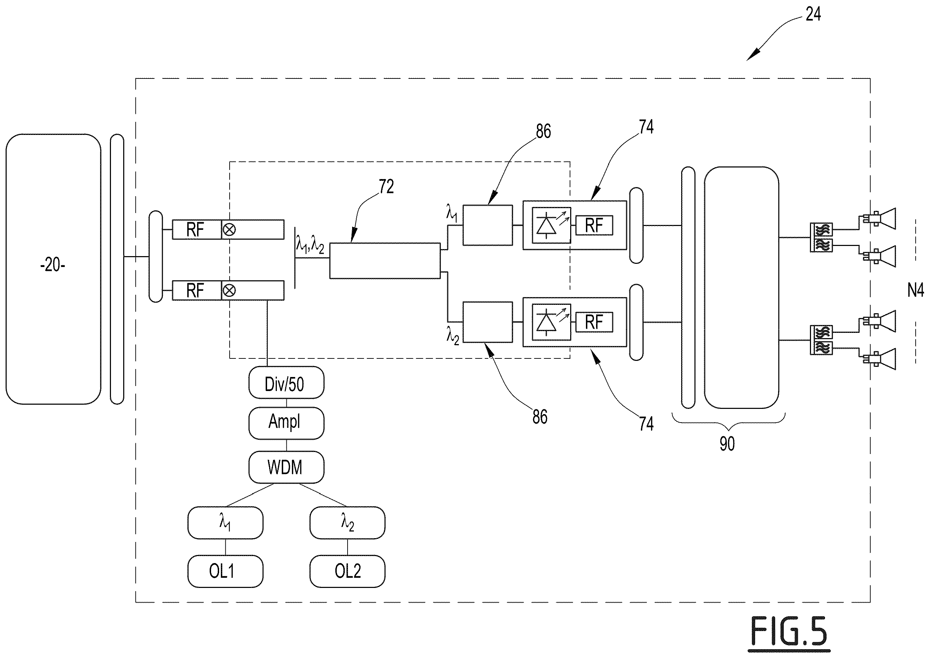

La figure 5 illustre un autre exemple de réalisation du dispositif de démultiplexage 24.

Selon cet exemple de réalisation, le dispositif de démultiplexage 24 comprend une pluralité de filtres RF optiques 86.

Chacun de ces filtres 86 est analogue aux filtres RF optiques 56 expliqués en relation avec le dispositif de multiplexage 22.

Dans l'exemple de la figure 5, chaque filtre RF optique 86 est raccordé entre l'un des photorécepteurs 74 et le démultiplexeur optique 72 correspondant.

Le fonctionnement du système de traitement numérique 10 sera désormais expliqué.

Il est considéré initialement que les récepteurs des signaux RF 12 reçoivent des signaux RF dans une bande de fréquence correspondante.

Chaque signal RF est ensuite transmis à l'entrée RF 44 du dispositif de multiplexage 22 pour être ensuite multiplexé par le multiplexeur RF 48 correspondant avec un autre signal RF reçu par un autre récepteur de signaux RF 12.

Ensuite, chaque signal multiplexé par le multiplexeur RF 48 est transmis à l'un des groupes de convertisseurs de fréquence 50. Les signaux RF reçus par le premier groupe de convertisseurs de fréquence sont convertis en signaux optiques de longueur d'onde λ₁ et les signaux RF transmis au deuxième groupe de convertisseurs de fréquence 50 sont convertis en signaux optiques de longueur d'onde λ₂.

Ensuite, les signaux de longueurs d'onde différentes multiplexés au sein d'un même multiplexeur optique 52 pour obtenir un signal optique multiplexé qui est ensuite converti en signal RF multiplexé par le photorécepteur 54 correspondant.

Ensuite, chaque signal RF multiplexé est transmis au processeur 20 via la sortie 46 correspondante.

Le processeur 20 convertit ensuite ces signaux RF en signaux numériques pour leur traitement numérique.

Ensuite, en fonction de ces signaux traités, le processeur 20 peut par exemple générer d'autres signaux numériques qui seront à transmettre par les émetteurs des signaux RF 14.

Dans un tel cas, le processeur 20 convertit ces signaux numériques en signaux analogiques qui sont ensuite transmis via les entrées 64 au dispositif de démultiplexage 24.

Ensuite, chaque signal reçu par le dispositif de démultiplexage 24 est traité d'abord par le convertisseur de fréquence 70 correspondant avant d'être transmis au démultiplexeur optique 72.

Ce démultiplexeur optique 72 génère alors des signaux optiques démultiplexés qui sont transmis aux photorécepteurs correspondants 74 et sont convertis par ces photorécepteurs 74 en signaux radiofréquences.

Ensuite, les signaux démultiplexés sont à nouveau démultiplexés par les démultiplexeurs 78 avant d'être transmis aux émetteurs de signaux 14 via les sorties 84.

Ainsi, les signaux radiofréquences sont reçus par les émetteurs de signaux RF 14 qui peuvent alors les émettre dans une bande fréquence correspondante.

On conçoit alors que la présente invention présente un certain nombre d'avantages.

Tout d'abord, l'invention permet de mettre en œuvre la fonction de multiplexage/démultiplexage en utilisant respectivement un multiplexeur/démultiplexeur optique. Ce dernier peut être produit en masse et présente un coût et une masse bien inférieurs à ceux utilisés traditionnellement dans l'état de la technique, à savoir les démultiplexeurs ou multiplexeurs radiofréquences.

Ainsi, la masse et le coût de dispositif de multiplexage et de démultiplexage peuvent être réduits.

En outre, l'invention permet d'utiliser davantage les connexions par des câbles en fibre optique.

Cela est particulièrement avantageux car la fibre optique présente un poids qui est inférieur à celui des harnais ou des câbles coaxiaux.

Ainsi, il est possible de remplacer la plupart des harnais ou des câbles coaxiaux utilisés actuellement dans les systèmes de traitement numérique par des câbles en fibre optique, ce qui permet de réduire davantage le coût et la masse de ce système.

Bien entendu, d'autres modes de réalisation sont également possibles.

## Revendications

1. Dispositif de multiplexage (22) des signaux RF comprenant :
- une pluralité d'entrées RF (44), chaque entrée RF (44) étant configurée pour recevoir un signal RF ;
- une pluralité de convertisseurs de fréquence (50), chaque convertisseur de fréquence (50) étant associé à une ou plusieurs entrées RF (44) et configuré pour recevoir les signaux RF issus de cet ou ces entrées RF (44) et pour les convertir en signaux optiques de longueur d'onde choisie parmi au moins deux longueurs d'onde différentes ;
- une pluralité de multiplexeurs optiques (52), chaque multiplexeur optique (52) étant configuré pour multiplexer au moins deux signaux optiques de longueurs d'onde différentes pour former un signal optique multiplexé ;
- une pluralité de photorécepteurs (54), chaque photorécepteur (54) étant configuré pour convertir un signal optique multiplexé en un signal RF multiplexé ;
- une pluralité de sorties RF (46), chaque sortie RF (46) étant configurée pour fournir un signal RF multiplexé.

2. Dispositif de multiplexage (22) selon la revendication 1, comprenant en outre une pluralité de multiplexeurs RF (48), chaque multiplexeur RF (48) étant associé à au moins deux entrées RF (44) et configuré pour multiplexer les signaux RF issus de ces entées RF (44).

3. Dispositif de multiplexage (22) selon la revendication 2, dans lequel chaque convertisseur de fréquence (50) est associé à l'un des multiplexeurs RF (48) et configuré pour recevoir un signal RF issu de ce multiplexeur RF (48).

4. Dispositif de multiplexage (22) selon l'une quelconque des revendications précédentes, dans lequel chaque convertisseur de fréquence (50) est un modulateur électro-optique de type Mach-Zehnder.

5. Dispositif de multiplexage (22) selon l'une quelconque des revendications précédentes, dans lequel le nombre de multiplexeurs optiques (52) est au moins deux fois inférieur à celui de convertisseurs de fréquence (50).

6. Dispositif de multiplexage (22) selon l'une quelconque des revendications précédentes, dans lequel le nombre de photorécepteurs (54) correspond à celui de multiplexeurs optiques (52).

7. Dispositif de multiplexage (22) selon l'une quelconque des revendications précédentes, dans lequel le nombre de sorties RF (46) est au moins deux fois inférieur, avantageusement quatre fois inférieur, à celui d'entrées RF (44).

8. Dispositif de multiplexage (22) selon l'une quelconque des revendications précédentes, comprenant en outre une pluralité de filtres RF optiques (56) configurés pour filtrer les signaux optiques avant leur multiplexage.

9. Dispositif de démultiplexage (24) des signaux RF comprenant :
- une pluralité d'entrées RF (64), chaque entrée RF (64) étant configurée pour recevoir un signal RF ;
- une pluralité de convertisseurs de fréquence (70), chaque convertisseur de fréquence (70) étant associé à l'une des entrées RF (64) et configuré pour recevoir les signaux RF issus de cette entrée RF (64) et pour les convertir en signaux optiques comprenant deux longueurs d'onde modulées ;
- une pluralité de démultiplexeurs optiques (72), chaque démultiplexeur optique (72) étant configuré pour démultiplexer chaque signal optique pour former au moins deux signaux optiques démultiplexés de longueurs d'onde différentes ;
- une pluralité de photorécepteurs (74), chaque photorécepteur (74) étant configuré pour convertir un signal optique démultiplexé en un signal RF démultiplexé ;
- une pluralité de sorties RF (84), chaque sortie RF (84) étant configurée pour fournir un signal RF démultiplexé.

10. Dispositif de démultiplexage (24) selon l'une quelconque des revendications précédentes, comprenant en outre une pluralité de filtres RF optiques (86) configurés pour filtrer les signaux optiques après leur démultiplexage.

11. Système de traitement numérique (10) comprenant un processeur (20) comprenant une pluralité de ports d'entrée analogiques et/ou une pluralité de ports de sortie analogiques ;
le système de traitement (10) comprenant en outre :
- un dispositif de multiplexage (22) selon l'une quelconque des revendications 1 à 8, connecté aux entrées analogiques du processeur (22) par ses sorties RF (46) ; et/ou
- un dispositif de démultiplexage (24) selon l'une quelconque des revendications 9 à 10, connecté aux sorties analogiques du processeur (22) par ses entrées RF (64).
